# FASCICULE DE BREVET EUROPEEN

(11) **EP 2 482 632 B1**
(45) Date de publication et mention de la délivrance du brevet: **05.06.2013**
(21) Numéro de dépôt: 10763806.6
(22) Date de dépôt: 03.09.2010
(51) Int. Cl.: A01D 34/68, F16D 23/04, F16H 63/30, F16D 11/14

(54) **TRANSMISSION ENTRE UN ARBRE PRIMAIRE MOTEUR ET UN ARBRE DE SORTIE D'UN ENGIN AUTOMOTEUR**
GETRIEBE ZWISCHEN EINE PRIMÄRE ANGETRIEBENE WELLE UND EINE AUSGANGSWELLE EINER SELBSTFAHRENDEN BAUMASCHINE
GEARBOX BETWEEN A PRIMARY MOTOR SHAFT AND AN OUTPUT SHAFT OF A SELF PROPELLED MACHINE.

(30) Priorité: 30.09.2009 FR 0904658
(43) Date de publication de la demande: 08.08.2012
(73) Titulaire: France Reducteurs, 85500 Les Herbiers (FR)
(72) Inventeur: BLANCHARD, Robert, F-85510 Le Boupere (FR)
(74) Mandataire: Godineau, Valérie
(86) Numéro de dépôt international: PCT/FR2010/051835
(87) Numéro de publication internationale: WO 2011/039440

(56) Documents cités:
- FR-A1- 2 867 534
- GB-A- 2 030 660
- US-A1- 2002 139 210

## Description

La présente invention concerne une transmission entre un arbre primaire moteur et un arbre de sortie, tel que l'arbre d'entraînement de roues, d'un engin automoteur.

Elle concerne plus particulièrement une transmission du type comprenant au moins un boîtier à l'intérieur duquel sont logés au moins partiellement, un mécanisme réducteur comportant un organe menant moteur, tel qu'une vis sans fin, en prise avec un organe rotatif mené, tel qu'une roue dentée, monté libre à rotation sur l'arbre de sortie, deux mécanismes d'embrayage, l'un progressif, l'autre non progressif à crabot mobile, par l'intermédiaire desquels l'organe rotatif mené est accouplable/désaccouplable de l'arbre de sortie et un dispositif de commande d'embrayage comprenant des premiers moyens de commande d"embrayage d'entraînement en déplacement axial du crabot mobile du mécanisme d'embrayage non progressif le long de l'arbre de sortie entre deux positions extrêmes, lesdits premiers moyens de commande d'embrayage étant actionnables depuis l'extérieur du boîtier, et des deuxièmes moyens de commande d'embrayage montés, sur l'arbre de sortie, mobiles, sous l'action du déplacement axial du crabot mobile dans le sens d'un embrayage, par contact d'appui avec ledit crabot mobile, entre une position active dans laquelle lesdits deuxièmes moyens de commande d'embrayage sont interposés entre crabot mobile et mécanisme d'embrayage progressif et forment un organe de transmission du mouvement axial du crabot mobile au mécanisme d'embrayage progressif pour le passage du mécanisme d'embrayage progressif d'une position débrayée à une position embrayée et, une position inactive ou escamotée, dans laquelle le crabot mobile est apte à passer d'une position débrayée à la position embrayée du mécanisme d'embrayage non progressif.

De telles transmissions sont bien connues à ceux versés dans cet art comme l'illustre le brevet GB-2.030.660. Ces transmissions sont économiques par rapport à une transmission comportant exclusivement des mécanismes d'embrayage progressif tout en conservant l'absence d'à-coup et la progressivité d'un embrayage progressif.

Toutefois, jusqu'à présent, les deuxièmes moyens de commande d'embrayage sont réalisés de manière complexe et manquent de fiabilité.

Un but de la présente invention est donc de proposer une transmission dont la conception est améliorée en vue d'accroître la fiabilité du dispositif de commande.

A cet effet, l'invention a pour objet une transmission entre un arbre primaire moteur et un arbre de sortie, tel que l'arbre d'entraînement de roues, d'un engin automoteur, du type comprenant au moins un boîtier à l'intérieur duquel sont logés au moins partiellement un mécanisme réducteur comportant un organe menant moteur, tel qu'une vis sans fin, en prise avec un organe rotatif mené, tel qu'une roue dentée, monté libre à rotation sur l'arbre de sortie, deux mécanismes d'embrayage, l'un progressif, l'autre non progressif à crabot mobile, par l'intermédiaire desquels l'organe rotatif mené est accouplable/désaccouplable de l'arbre de sortie, un dispositif de commande d'embrayage comprenant des premiers moyens de commande d"embrayage d'entraînement en déplacement axial du crabot mobile du mécanisme d'embrayage non progressif le long de l'arbre de sortie entre deux positions extrêmes, lesdits premiers moyens de commande d'embrayage étant actionnables depuis l'extérieur du boîtier, et des deuxièmes moyens de commande d'embrayage montés, sur l'arbre de sortie, mobiles, sous l'action du déplacement axial du crabot mobile dans le sens d'un embrayage, par contact d'appui avec ledit crabot mobile, entre une position active, dans laquelle lesdits deuxièmes moyens de commande d'embrayage sont interposés entre crabot mobile et mécanisme d'embrayage progressif et forment un organe de transmission du mouvement axial du crabot mobile au mécanisme d'embrayage progressif pour le passage du mécanisme d'embrayage progressif d'une position débrayée à une position embrayée et une position inactive ou escamotée, dans laquelle le crabot mobile est apte à passer d'une position débrayée à la position embrayée du mécanisme d'embrayage non progressif, caractérisée en ce que les deuxièmes moyens de commande d'embrayage comprennent au moins une lame ressort s'étendant le long de l'arbre de sortie, cette lame ressort, montée mobile axialement sur ledit arbre de sortie, étant, lors du déplacement axial du crabot mobile depuis la position extrême débrayée dans le sens d'un embrayage, par appui dudit crabot mobile sur ladite lame ressort, entraînable axialement sur ledit arbre et déformable élastiquement entre une position active, dans laquelle le crabot mobile bute contre ladite lame ressort pour transmettre, via la lame ressort interposée entre crabot mobile et mécanisme d'embrayage progressif, son mouvement axial au mécanisme d'embrayage progressif et, une position inactive, dans laquelle le crabot mobile glisse le long de la lame ressort pour le passage du mécanisme d'embrayage non progressif d'une position débrayée à une position embrayée.

La lame est donc, pendant la phase d'embrayage, déformable en fonction de l'effort d'appui exercé par le crabot mobile sur ladite lame et est apte à passer d'une position active dans laquelle elle est solidaire en déplacement axial avec le crabot mobile et transmet le mouvement axial du crabot mobile au mécanisme d'embrayage progressif pour le passage d'une position débrayée à une position embrayée du mécanisme d'embrayage progressif à une position inactive dans laquelle le crabot mobile est désolidarisé en déplacement axial de la lame et monté mobile axialement sur ledit arbre de sortie par rapport à la lame pour permettre son passage de la position décrabotée ou débrayée à la position crabotée en embrayée du mécanisme d'embrayage non progressif. La réalisation des deuxièmes moyens de commande d'embrayage sous forme essentiellement d'une lame déformable simplifie la construction de l'ensemble de la transmission. Par ailleurs, le fonctionnement d'une telle transmission est parfaitement fiable. La progressivité est conservée grâce au fait que le mécanisme d'embrayage progressif est amené en position embrayée préalablement au passage à la position embrayée du mécanisme d'embrayage non progressif.

Selon une forme de réalisation préférée de l'invention, les deuxièmes moyens de commande d'embrayage comprennent au moins deux lames ressort s'étendant le long de l'arbre de sortie et montées, de préférence, diamétralement opposées par rapport audit arbre de sortie, lesdites lames ressort étant à, ou au voisinage de, l'une de leurs extrémités couplées l'une à l'autre, pour un montage solidaire en déplacement axial le long dudit arbre de sortie, par l'intermédiaire d'une bague enfilée sur ledit arbre de sortie.

De préférence, le mécanisme d'embrayage non progressif à crabot mobile logé à l'intérieur du boîtier comprend, outre le crabot mobile du genre manchon, un flasque évidé, crabot mobile et flasque portant sur leurs faces en regard des dents, le flasque évidé étant solidaire en rotation de l'organe rotatif mené du mécanisme réducteur tandis que le crabot mobile, solidaire en rotation de l'arbre de sortie traversant ledit boîtier, est mobile axialement sous l'action des premiers moyens de commande d'embrayage, notamment dans le sens d'un rapprochement dudit flasque de sorte que les dents du flasque et du crabot mobile viennent en position embrayée se loger entre elles de manière à assurer, sous l'effet d'un entraînement en rotation de l'organe rotatif mené du mécanisme réducteur, l'entraînement en rotation du crabot mobile axialement et par suite un entraînement en rotation de l'arbre de sortie traversant axialement le flasque et le crabot mobile, les deuxièmes moyens de commande d'embrayage étant, en position active, interposés entre crabot mobile et flasque.

Dans un mode de réalisation préféré, le crabot mobile du mécanisme d'embrayage non progressif affecte la forme d'un manchon monté solidaire en rotation de l'arbre de sortie et déplaçable axialement par coulissement le long dudit arbre de sortie, ce manchon étant muni d'un épaulement périphérique interne contre lequel la ou les lames ressort des deuxièmes moyens de commande d'embrayage viennent en appui en position active, cet épaulement périphérique interne étant réalisé soit d'une seule pièce avec ledit crabot mobile, soit à l'aide d'une pièce rapportée montée solidaire axialement et en rotation du crabot 16 mobile.

Lorsque la transmission est du type dans laquelle le crabot mobile du mécanisme d'embrayage non progressif est un manchon, monté solidaire en rotation de l'arbre de sortie et déplaçable axialement par coulissement le long dudit arbre de sortie, de préférence la ou chaque lame des deuxièmes moyens de commande d'embrayage est en position active disposée par l'une de ses extrémités dite libre, en appui contre un épaulement périphérique interne dudit crabot mobile, ladite extrémité libre de la ou chaque lame étant recourbée en direction de l'arbre de sortie pour former une rampe facilitant, par coopération avec l'épaulement périphérique interne du crabot mobile, l'escamotage de la lame correspondante en vue de son passage à la position inactive.

De préférence, la ou chaque portion d'épaulement périphérique interne du crabot mobile, contre laquelle la ou une lame ressort vient par son extrémité libre en butée, s'étend à l'intérieur d'une rainure axiale interne dudit manchon, la ou les lames étant, à l'état introduit dans les rainures, montées solidaires en rotation du manchon.

Généralement, le crabot mobile du mécanisme d'embrayage non progressif est monté solidaire en rotation de l'arbre de sortie par l'intermédiaire d'au moins un cavalier en U, l'une des branches du U formant une butée axiale des deuxièmes moyens de commande d'embrayage lors du déplacement axial du crabot mobile dans le sens d'un débrayage.

Selon un mode de réalisation préféré, l'organe rotatif mené du mécanisme réducteur est une roue dentée montée libre en rotation sur l'arbre de sortie, les mécanismes d'embrayage étant disposés sur l'arbre de sortie, l'un d'un côté, l'autre de l'autre côté de la roue dentée.

De préférence, le mécanisme d'embrayage progressif est un embrayage par friction à cônes, cet embrayage comprenant un cône mâle solidaire en rotation de l'arbre de sortie et une portée conique, dite femelle, solidaire en rotation de l'organe mené rotatif du mécanisme réducteur, cône et portée conique, disposés coaxiaux par rapport à l'arbre de sortie, étant montés, par l'intermédiaire au moins des deuxièmes moyens de commande d'embrayage, mobiles dans le sens d'un rapprochement ou d'un écartement l'un de l'autre pour assurer le serrage ou le desserrage du cône mâle et de la portée conique.

De préférence encore, les premiers moyens de commande d'embrayage comprennent un organe, tel qu'une fourchette, déplaçable angulairement autour d'un axe sensiblement perpendiculaire à l'axe de l'arbre de sortie, cet organe comprenant au moins une partie, telle qu'une dent, insérée à l'intérieur d'une gorge annulaire externe du crabot mobile du mécanisme d'embrayage non progressif.

L'invention sera bien comprise à la lecture de la description suivante d'exemples de réalisation, en référence aux dessins annexés dans lesquels :
la figure 1 représente une vue en perspective d'une transmission en position éclatée des éléments la constituant ;
la figure 2 représente une vue en perspective du crabot mobile et des seconds moyens de commande d'embrayage ;
la figure 3 représente une vue en coupe du boîtier de la transmission en position extrême débrayée des deux mécanismes d'embrayage ;
la figure 4 représente une vue en coupe du boîtier de la transmission en position embrayée du mécanisme d'embrayage progressif ;
la figure 5 représente une vue en coupe du boîtier de transmission en position embrayée du mécanisme d'embrayage non progressif.

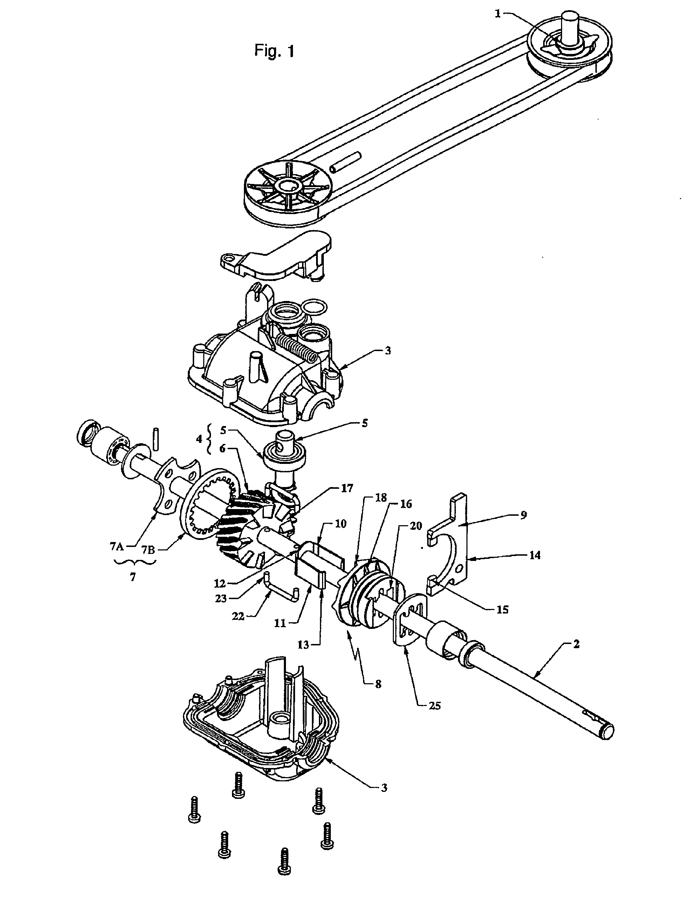

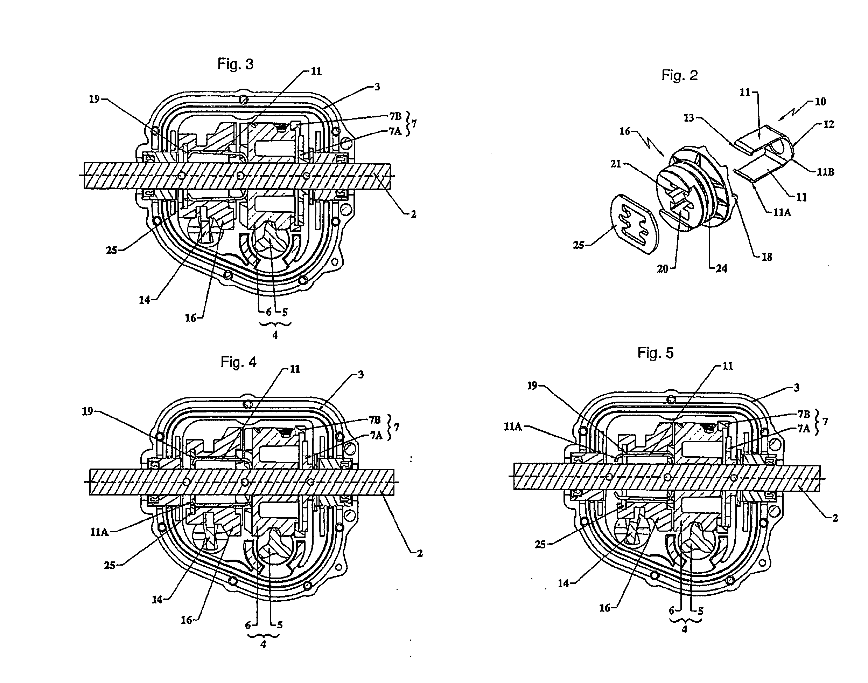

Comme mentionné ci-dessus, la transmission, objet de l'invention, destinée à transmettre le mouvement de rotation de l'arbre 1 primaire moteur d'un engin automoteur, tel qu'une tondeuse à gazon, à un arbre 2 de sortie, tel que l'arbre d'entraînement des roues dudit engin, comprend au moins un boîtier 3, généralement en matière de synthèse et formé par exemple de deux demi-coquilles assemblées entre elles par un plan de joint. Ce boîtier 3 loge, au moins partiellement, un mécanisme 4 réducteur, deux mécanismes 7, 8 d'embrayage et un dispositif de commande d'embrayage. Le mécanisme 4 réducteur comprend, comme l'illustre la figure 1, un organe 5 menant moteur, formé par exemple par une vis sans fin en prise avec un organe 6 rotatif mené, constitué dans l'exemple représenté par une roue dentée montée libre à rotation et mobile axialement sur l'arbre 2 de sortie. L'organe 6 rotatif mené ou roue dentée est accouplable/désaccouplable de l'arbre 2 de sortie par les deux mécanismes d'embrayage 7, 8 montés chacun sur l'arbre 2 de sortie et disposés l'un d'un côté, l'autre de l'autre côté de la roue dentée 6. L'un des mécanismes d'embrayage, représenté en 7 aux figures, est un mécanisme d'embrayage par friction à cônes. Cet embrayage comprend un cône 7A mâle solidaire en rotation de l'arbre 2 de sortie et une portée 7B conique, dite femelle, solidaire en rotation de l'organe mené rotatif du mécanisme 4 réducteur, en l'occurrence de la roue 6 dentée. Le cône 7A mâle et la portée 7B conique, disposés coaxiaux par rapport à l'arbre 2 de sortie, sont montés, par l'intermédiaire du dispositif de commande d'embrayage mobiles dans le sens d'un rapprochement ou d'un écartement. En position rapprochée correspondant à la position embrayée du mécanisme d'embrayage progressif, le cône 7A mâle est logé au moins partiellement à l'intérieur de la portée 7B conique femelle de sorte que le mouvement rotatif de la portée 7B conique imprimé à ladite portée 7B par la roue dentée 6 est transmis via le cône 7A mâle à l'arbre 2 de sortie. Cette position des cônes est visible à la figure 4. La position écartée du cône 7A mâle et de la portée 7B conique femelle correspond à la position débrayée du mécanisme d'embrayage progressif et est représentée à la figure 2.

Le mécanisme 8 d'embrayage non progressif à crabot 16 mobile comprend quant à lui, outre le crabot 16 mobile du genre manchon, un flasque 17 évidé. Crabot 16 mobile et flasque 17 portent sur leurs faces en regard des dents 18. Le flasque 17 évidé est solidaire en rotation de l'organe 6 rotatif mené du mécanisme 4 réducteur donc de la roue dentée 6. Dans l'exemple représenté, flasque 17 et roue dentée 6 forment un ensemble rotatif solidaire en rotation. Le crabot 16 mobile est monté solidaire en rotation de l'arbre 2 de sortie traversant le boîtier 3 et mobile axialement le long dudit arbre. Ce crabot 16 mobile est monté solidaire en rotation de l'arbre 2 de sortie par l'intermédiaire d'au moins un cavalier 22 en U. Chaque branche du cavalier vient s'insérer dans un perçage de l'arbre 2. L'âme du U constitutive du cavalier, disposée parallèle à l'arbre 2 de sortie, vient se loger à l'intérieur d'une rainure 21 axiale périphérique interne du manchon constitutif du crabot mobile 16 de sorte que le crabot 16 mobile peut librement se déplacer par glissement le long du cavalier. Dans les exemples représentés, deux cavaliers diamétralement opposés sont utilisés pour la solidarisation en rotation du crabot mobile à l'arbre 2 de sortie, le crabot 16 mobile comportant deux rainures 21 diamétralement opposées accueillant chacune un cavalier. Les cavaliers 22 guident axialement en déplacement ledit crabot 16 mobile. Ce crabot 16 mobile comporte encore une gorge 24 annulaire externe et deux rainures 20 axiales internes borgnes dont le rôle sera décrit ci-après. En position embrayée du mécanisme d'embrayage non progressif, le crabot 16 mobile est rapproché du flasque 17 évidé et les dents 18 du crabot 16 mobile se logent entre les dents du flasque 17 de manière à permettre au flasque 17 mobile de transmettre son mouvement rotatif au crabot 16 mobile et par suite à l'arbre 2 de sortie.

Pour permettre le passage de chaque mécanisme d'embrayage d'une position débrayée à une position embrayée, il est prévu un dispositif de commande d'embrayage. Ce dispositif de commande d'embrayage comprend des premiers moyens 9 de commande d'embrayage, actionnables depuis l'extérieur du boîtier 3 et, des deuxièmes moyens 10 de commande d'embrayage. Les premiers moyens de commande d'embrayage commandent le déplacement axial du crabot 16 mobile des moyens 8 d'embrayage non progressif le long de l'arbre 2 de sortie. Ces premiers moyens 9 de commande d'embrayage comprennent un organe 14, tel qu'une fourchette, déplaçable angulairement autour d'un axe sensiblement perpendiculaire à l'axe de l'arbre 2 de sortie. Cette fourchette comprend au moins une partie, telle qu'une dent 15, insérée à l'intérieur d'une gorge 24 annulaire externe du crabot 16 mobile du mécanisme 8 d'embrayage non progressif.

En particulier, tel que représenté, l'organe 14 de commande d'embrayage est déplaçable angulairement à l'aide d'un levier de commande extérieur au boîtier. Cet organe 14 de commande d'embrayage est une fourchette à deux branches. L'âme de la fourchette, reliant lesdites branches entre elles, est prolongée axialement, de part et d'autre desdites branches, pour former des tronçons de tige de section carrée ou rectangulaire venant s'insérer dans des paliers ménagés dans chaque demi-coquille du boîtier. Chaque branche de la fourchette est munie d'une dent 15 radiale interne de manière à assurer un emprisonnement des dents de la fourchette à l'intérieur de la gorge 24 annulaire externe du crabot mobile axialement du mécanisme d'embrayage non progressif. Ainsi, un déplacement angulaire de la fourchette autour d'un axe orthogonal à l'arbre 2 de sortie permet un déplacement axial du crabot 16 mobile le long dudit arbre 2 de sortie dans le sens d'un rapprochement du flasque 17 évidé ou d'un écartement de ce flasque.

Les deuxièmes moyens 10 de commande d'embrayage comprennent quant à eux au moins une lame 11 ressort s'étendant le long de l'arbre 2 de sortie. Cette lame 11 ressort est montée mobile axialement le long dudit arbre. Cette lame est, lors du déplacement axial du crabot 16 mobile depuis la position extrême débrayée dans le sens d'un embrayage, par appui dudit crabot 16 mobile sur ladite lame 11 ressort, entraînable axialement sur ledit arbre 2 et déformable élastiquement entre une position active, dans laquelle le crabot 16 mobile bute contre ladite lame 11 ressort pour transmettre, via la lame 11 ressort interposée entre crabot 16 mobile et mécanisme 7 d'embrayage progressif son mouvement axial au mécanisme 7 d'embrayage progressif et le passage du mécanisme 7 d'embrayage progressif à la position embrayée, et une position inactive dans laquelle le crabot 16 mobile glisse le long de la lame 11 ressort pour le passage du mécanisme 8 d'embrayage non progressif d'une position débrayée à une position embrayée.

Dans les exemples représentés, les deuxièmes moyens 10 de commande d'embrayage comprennent au moins deux lames 11 ressort s'étendant le long de l'arbre 2 de sortie. Ces lames 11 ressort sont montées diamétralement opposées par rapport audit arbre 2 de sortie. Elles sont, au voisinage de l'une de leurs extrémités, représentée en 11 B, couplées l'une à l'autre, pour un montage solidaire en déplacement axial le long dudit arbre 2 de sortie, par l'intermédiaire d'une bague 12 enfilée sur ledit arbre 2 de sortie. Bague et lames forment un ensemble réalisé d'une seule pièce qui peut être fabriqué par exemple par pliage et emboutissage d'une tôle. Une solution équivalente aurait pu être formée d'une lame munie à l'une de ses extrémités d'une bague enfilée sur l'arbre 2 de sortie.

La ou chaque lame 11 ressort des deuxièmes moyens 10 de commande d'embrayage est, en position active, disposée par l'une de ses extrémités, dite libre, représentée en 11A aux figures, en appui contre un épaulement 19 périphérique interne du crabot 16 mobile. Cet épaulement 19 périphérique interne du crabot 16 mobile peut être réalisé, soit d'une seule pièce avec ledit crabot 16 mobile, soit à l'aide d'une pièce 25 rapportée, de préférence métallique, montée solidaire axialement et en rotation dudit crabot 16 mobile. Dans les exemples représentés, cette deuxième solution est retenue. La pièce 25, rapportée sur l'une des faces d'extrémité du manchon constitutif du corps de crabot 16 mobile, se présente sous forme d'une plaquette métallique évidée centralement. Cette plaquette est solidarisée à la face d'extrémité du crabot 16 mobile opposée à celle en regard du flasque 17 évidé. Cette solidarisation s'opère par insertion de la plaquette à l'intérieur de deux encoches diamétralement opposées du manchon constitutif du corps de crabot 16 mobile. Cette pièce 25 rapportée réduit l'usure générée par la friction des lames 11 ressort. Cette extrémité 11A libre de la ou chaque lame 11 ressort est recourbée en direction de l'arbre de sortie pour former une rampe 13 facilitant, par coopération avec l'épaulement 19 périphérique interne du crabot 16 mobile, l'escamotage de la lame 11 ressort correspondante en vue de son passage à la position inactive.

La ou chaque portion d'épaulement 19 périphérique interne du crabot 16 mobile, contre laquelle la ou une lame 11 ressort vient par son extrémité 11A libre en butée, s'étend partiellement à l'intérieur d'une rainure 20 axiale interne dudit manchon, la ou les lames 11 ressort étant, à l'état introduit dans les rainures 20, montées solidaires en rotation du manchon. L'épaulement 19 périphérique interne du crabot 16 mobile forme ainsi à chaque fois une extrémité de la rainure 20 axiale dont l'autre extrémité ouverte débouche dans une face d'extrémité du manchon constitutif du crabot 16 mobile. L'épaulement 19 périphérique interne du crabot 16 ferme ainsi partiellement ladite rainure 20 axiale. La ou chaque rainure 20 est par ailleurs ouverte en direction du passage traversant formé par le manchon constitutif du crabot 16 mobile.

Les deuxièmes moyens 10 de commande viennent par la bague 12 en appui contre le flasque 17 évidé du mécanisme d'embrayage non progressif. Ainsi, les deuxièmes moyens de commande d'embrayage sont, en position active, pris en sandwich entre le crabot 16 mobile et le flasque 17 évidé. Lorsque le crabot 16 mobile est, via les premiers moyens de commande d'embrayage, déplacé axialement depuis la position extrême débrayée, telle que représentée à la figure 3, ce crabot 16 mobile entraîne en déplacement axial, le long de l'arbre 2 de sortie, les deuxièmes moyens de commande d'embrayage qui eux-mêmes appuient sur le flaque 17 évidé solidaire en déplacement de la roue 6 dentée et de la portée 7B conique femelle du mécanisme d'embrayage progressif. La portée 7B conique est alors amenée en position embrayée de butée contre le cône 7A mâle. Le mécanisme d'embrayage progressif est embrayé comme l'illustre la figure 4. La poursuite du déplacement du crabot 16 mobile entraîne une déformation des lames 11 ressort soumises à un effort d'appui de la part du crabot 16 mobile supérieur à une valeur prédéterminée puisque ces lames sont par leur autre extrémité en butée via la bague contre le flasque 17 évidé. Cette butée résulte du passage en position embrayée du mécanisme d'embrayage progressif et du fait que le cône mâle du mécanisme d'embrayage progressif est monté fixe axialement sur l'arbre 2 de sortie. La poursuite du déplacement du crabot 16 mobile entraîne donc une déformation des lames. Lors de cette déformation, les lames tendent à sortir de la zone épaulée de la rainure axiale du manchon et se rapprochent de l'arbre 2 de sortie. Dans cette position inactive des lames, le crabot 16 mobile peut coulisser librement le long des lames comme l'illustre la figure 4 jusqu'à la position embrayée du mécanisme d'embrayage non progressif. En position échappée de la zone épaulée du manchon, les lames 11 ressort s'insèrent dans l'espace laisse libre entre le pourtour intérieur du manchon constitutif du crabot 16 mobile et l'arbre 2 de sortie comme l'illustre la figure 5. En effet, le crabot 16 mobile est réalisé de manière à être enfilé avec un jeu sur l'arbre de sortie. C'est ce jeu qui constitue l'espace libre à l'intérieur duquel les lames 11 ressort peuvent se loger lorsqu'elles échappent de l'épaulement 19 après avoir été déformées sous l'action du crabot 16 mobile.

Le passage à la position débrayée s'opère par déplacement des premiers moyens de commande d'embrayage dans une direction opposée, ce qui entraîne un recul, c'est-à-dire un déplacement du crabot 16 mobile dans le sens d'un écartement du flasque 17 évidé. Lors de ce déplacement axial, sur une partie de la course du crabot 16 mobile, les deuxièmes moyens de commande en déplacement sont retenus en déplacement axial par l'une des branches du cavalier 22 qui forme une butée axiale des deuxièmes moyens de commande d'entraînement. Cette branche du cavalier est logée entre la bague 12 des deuxièmes moyens de commande d'entraînement et le crabot 16 mobile. Cette butée axiale permet aux lames 11 ressort des deuxièmes moyens de commande d'entraînement de se repositionner en appui par leur extrémité 11A libre contre l'épaulement périphérique interne du manchon constitutif du crabot mobile au-delà d'une position prédéterminée de recul dudit manchon. La transmission est alors prête pour une nouvelle phase d'embrayage.

Il doit être noté que, dans ce qui précède, les lames 11 ressort des deuxièmes moyens de commande d'embrayage se déforment en se rapprochant de l'arbre 2 de sortie lors de leur passage de la position active à la position inactive. Elles auraient pu de manière équivalente se déformer en s'écartant dudit arbre 2 de sortie.

On comprend, à travers ce qui précède, que les deuxièmes moyens de commande d'embrayage sont montés mobiles axialement le long de l'arbre 2 de sortie entre une position d'appui contre le flasque 17 évidé centralement et une position d'appui contre l'une des branches du cavalier 22, ladite branche étant représentée en 23 aux figures. La butée axiale constitutive de la branche 23 du cavalier est active lors des phases de débrayage tandis que la position d'appui des deuxièmes moyens de commande d'embrayage contre le flasque 17 évidé est active pendant la phase d'embrayage.

## Revendications

1. Transmission entre un arbre (1) primaire moteur et un arbre (2) de sortie, tel que l'arbre d'entraînement de roues, d'un engin automoteur, du type comprenant au moins un boîtier (3) à l'intérieur duquel sont logés au moins partiellement un mécanisme (4) réducteur comportant un organe (5) menant moteur, tel qu'une vis sans fin, en prise avec un organe (6) rotatif mené, tel qu'une roue dentée, monté libre à rotation sur l'arbre (2) de sortie, deux mécanismes (7, 8) d'embrayage, l'un (7) progressif, l'autre (8) non progressif à crabot (16) mobile, par l'intermédiaire desquels l'organe (6) rotatif mené est accouplable/désaccouplable de l'arbre (2) de sortie, un dispositif de commande d'embrayage comprenant des premiers moyens (9) de commande d'embrayage d'entraînement en déplacement axial du crabot (16) mobile du mécanisme (8) d'embrayage non progressif le long de l'arbre (2) de sortie entre deux positions extrêmes, lesdits premiers moyens (9) de commande d'embrayage étant actionnables depuis l'extérieur du boîtier (3), et des deuxièmes moyens (10) de commande d'embrayage montés, sur l'arbre (2) de sortie, mobiles, sous l'action du déplacement axial du crabot (16) mobile dans le sens d'un embrayage, par contact d'appui avec ledit crabot (16) mobile, entre une position active, dans laquelle lesdits deuxièmes moyens (10) de commande d'embrayage sont interposés entre crabot (16) mobile et mécanisme (7) d'embrayage progressif et forment un organe de transmission du mouvement axial du crabot (16) mobile au mécanisme (7) d'embrayage progressif pour le passage du mécanisme d'embrayage progressif d'une position débrayée à une position embrayée et une position inactive ou escamotée, dans laquelle le crabot (16) mobile est apte à passer d'une position débrayée à la position embrayée du mécanisme (8) d'embrayage non progressif,
**caractérisée en ce que** les deuxièmes moyens (10) de commande d'embrayage comprennent au moins une lame (11) ressort s'étendant le long de l'arbre (2) de sortie, cette lame (11) ressort, montée mobile axialement sur ledit arbre (2) de sortie, étant, lors du déplacement axial du crabot (16) mobile depuis la position extrême débrayée dans le sens d'un embrayage, par appui dudit crabot (16) mobile sur ladite lame (11) ressort, entraînable axialement sur ledit arbre (2) et déformable élastiquement entre une position active, dans laquelle le crabot (16) mobile bute contre ladite lame (11) ressort pour transmettre, via la lame (11) ressort interposée entre crabot (16) mobile et mécanisme (7) d'embrayage progressif, son mouvement axial au mécanisme (7) d'embrayage progressif et, une position inactive, dans laquelle le crabot (16) mobile glisse le long de la lame (11) ressort pour le passage du mécanisme (8) d'embrayage non progressif d'une position débrayée à une position embrayée.

2. Transmission selon la revendication 1,
**caractérisée en ce que** les deuxièmes moyens (10) de commande d'embrayage comprennent au moins deux lames (11) ressort s'étendant le long de l'arbre (2) de sortie et montées, de préférence, diamétralement opposées par rapport audit arbre (2) de sortie, lesdites lames (11) ressort étant à, ou au voisinage de, l'une (11B) de leurs extrémités (11A, 11B) couplées l'une à l'autre, pour un montage solidaire en déplacement axial le long dudit arbre (2) de sortie, par l'intermédiaire d'une bague (12) enfilée sur ledit arbre (2) de sortie.

3. Transmission selon l'une des revendications 1 et 2,
**caractérisée en ce que** le mécanisme (8) d'embrayage non progressif à crabot (16) mobile logé à l'intérieur du boîtier (3) comprend, outre le crabot (16) mobile du genre manchon, un flasque (17) évidé, crabot (16) mobile et flasque (17) portant sur leurs faces en regard des dents (18), le flasque (17) évidé étant solidaire en rotation de l'organe (6) rotatif mené du mécanisme (4) réducteur tandis que le crabot (16) mobile, solidaire en rotation de l'arbre (2) de sortie traversant ledit boîtier (3), est mobile axialement sous l'action des premiers moyens (9) de commande d'embrayage, notamment dans le sens d'un rapprochement dudit flasque (17) de sorte que les dents (18) du flasque (17) et du crabot (16) mobile viennent en position embrayée se loger entre elles de manière à assurer, sous l'effet d'un entraînement en rotation de l'organe (6) rotatif mené du mécanisme (4) réducteur, l'entraînement en rotation du crabot (16) mobile axialement et par suite un entraînement en rotation de l'arbre (2) de sortie traversant axialement le flasque (17) et le crabot (16) mobile, les deuxièmes moyens (10) de commande d'embrayage étant, en position active, interposés entre crabot (16) mobile et flasque (17).

4. Transmission selon l'une des revendications 1 à 3,
**caractérisée en ce que** le crabot (16) mobile du mécanisme (8) d'embrayage non progressif affecte la forme d'un manchon monté solidaire en rotation de l'arbre (2) de sortie et déplaçable axialement par coulissement le long dudit arbre (2) de sortie, ce manchon étant muni d'un épaulement (19) périphérique interne contre lequel la ou les lames (11) ressort des deuxièmes moyens (10) de commande d'embrayage viennent en appui en position active, cet épaulement (19) périphérique interne étant réalisé, soit d'une seule pièce avec ledit crabot (16) mobile, soit à l'aide d'une pièce (25) rapportée montée solidaire axialement et en rotation du crabot (16) mobile.

5. Transmission selon l'une des revendications 1 à 4, du type dans laquelle le crabot (16) mobile du mécanisme (8) d'embrayage non progressif est un manchon, monté solidaire en rotation de l'arbre (2) de sortie et déplaçable axialement par coulissement le long dudit arbre (2) de sortie,
**caractérisée en ce que** la ou chaque lame (11) ressort des deuxièmes moyens (10) de commande d'embrayage est en position active disposée par l'une (11 A) de ses extrémités dite libre, en appui contre un épaulement (19) périphérique interne dudit crabot (16) mobile, ladite extrémité (11A) libre de la ou chaque lame (11) ressort étant recourbée en direction de l'arbre de sortie pour former une rampe (13) facilitant, par coopération avec l'épaulement (19) périphérique interne du crabot (16) mobile, l'escamotage de la lame (11) ressort correspondante en vue de son passage à la position inactive.

6. Transmission selon l'une des revendications 4 et 5,
**caractérisée en ce que** la ou chaque portion d'épaulement (19) périphérique interne du crabot (16) mobile, contre laquelle la ou une lame (11) ressort vient par son extrémité (11A) libre en butée, s'étend partiellement à l'intérieur d'une rainure (20) axiale interne dudit manchon, la ou les lames (11) ressort étant, à l'état introduit dans les rainures (20), montées solidaires en rotation du manchon.

7. Transmission selon l'une des revendications 1 à 6,
**caractérisée en ce que** le crabot (16) mobile du mécanisme (8) d'embrayage non progressif est monté solidaire en rotation de l'arbre (2) de sortie par l'intermédiaire d'au moins un cavalier (22) en U, l'une (23) des branches du U formant une butée axiale des deuxièmes moyens (10) de commande d'embrayage lors du déplacement axial du crabot (16) mobile dans le sens d'un débrayage.

8. Transmission selon l'une des revendications 1 à 7,
**caractérisée en ce que** l'organe (6) rotatif mené du mécanisme (4) réducteur est une roue dentée montée libre en rotation sur l'arbre (2) de sortie, les mécanismes (7, 8) d'embrayage étant disposés sur l'arbre (2) de sortie, l'un d'un côté, l'autre de l'autre côté de la roue dentée.

9. Transmission selon l'une des revendications 1 à 8,
**caractérisée en ce que** le mécanisme (7) d'embrayage progressif est un embrayage par friction à cônes, cet embrayage comprenant un cône (7A) mâle solidaire en rotation de l'arbre (2) de sortie et une portée (7B) conique, dite femelle, solidaire en rotation de l'organe mené rotatif du mécanisme (4) réducteur, cône (7A) et portée (7B) conique, disposés coaxiaux par rapport à l'arbre (2) de sortie, étant montés, par l'intermédiaire au moins des deuxièmes moyens (10) de commande d'embrayage, mobiles dans le sens d'un rapprochement ou d'un écartement l'un de l'autre pour assurer le serrage ou le desserrage du cône (7A) mâle et de la portée (7B) conique.

10. Transmission selon l'une des revendications 1 à 9,
**caractérisée en ce que** les premiers moyens (9) de commande d'embrayage comprennent un organe (14), tel qu'une fourchette, déplaçable angulairement autour d'un axe sensiblement perpendiculaire à l'axe de l'arbre (2) de sortie, cet organe (14) comprenant au moins une partie, telle qu'une dent (15), insérée à l'intérieur d'une gorge (24) annulaire externe du crabot (16) mobile du mécanisme (8) d'embrayage non progressif.

## Patentansprüche

1. Getriebe zwischen einer primären Antriebswelle (1) und einer Ausgangswelle (2) wie der Radantriebswelle einer selbstfahrenden Baumaschine der Bauart, die mindestens ein Gehäuse (3) umfasst, in dem mindestens teilweise ein Untersetzungsgetriebe (4), das ein führendes Antriebsorgan (5) aufweist wie eine Schnecke in Ineingriffnahme mit einem geführten drehenden Organ (6) wie einem Zahnrad, das frei drehend auf der Ausgangswelle (2) montiert ist, zwei Kupplungsmechanismen (7, 8), wobei der eine (7) progressiv, der andere (8) nicht progressiv mit beweglicher Klaue (16) ist, über die das geführte drehende Organ (6) mit der Ausgangswelle (2) koppelbar/entkoppelbar ist, untergebracht sind, wobei eine Steuervorrichtung der Kupplung erste Kupplungssteuermittel (9) für den axial verlagernden Antrieb der beweglichen Klaue (16) des nicht progressiven Kupplungsmechanismus (8) entlang der Ausgangswelle (2) zwischen zwei extremen Positionen umfasst, wobei die ersten Kupplungssteuermittel (9) von außerhalb des Gehäuses (3) betätigbar sind, und zweite Kupplungssteuermittel (10), die auf der Ausgangswelle (2) montiert sind, die unter der Einwirkung der axialen Verlagerung der beweglichen Klaue (16) in Richtung einer Kupplung durch Abstützkontakt mit der beweglichen Klaue (16) zwischen einer aktiven Position, in der die zweiten Kupplungssteuermittel (10) zwischen beweglicher Klaue (16) und progressivem Kupplungsmechanismus (7) zwischengestellt sind und ein Übertragungsorgan der axialen Bewegung der beweglichen Klaue (16) zum progressiven Kupplungsmechanismus (7) für den Übergang des progressiven Kupplungsmechanismus aus einer entkuppelten Position in eine gekuppelte Position bilden, und einer inaktiven oder eingezogenen Position, in der die bewegliche Klaue (16) imstande ist, von einer entkuppelten Position in die gekuppelte Position des nicht progressiven Kupplungsmechanismus (8) zu wechseln, bewegbar sind,
**dadurch gekennzeichnet, dass** die zweiten Kupplungssteuermittel (10) mindestens eine Federzunge (11) umfassen, die sich entlang der Ausgangswelle (2) erstreckt, wobei diese Federzunge (11), die auf der Ausgangswelle (2) axial beweglich montiert ist, bei der axialen Verlagerung der beweglichen Klaue (16) von der extremen ausgekuppelten Position in Richtung einer Kupplung durch Abstützung der beweglichen Klaue (16) auf der Federzunge (11) zwischen einer aktiven Position, in der die bewegliche Klaue (16) an die Federzunge (11) anschlägt, um über die Federzunge (11), die zwischen beweglicher Klaue (16) und progressivem Kupplungsmechanismus (7) zwischengestellt ist, ihre axiale Bewegung auf den progressiven Kupplungsmechanismus (7) zu übertragen, und einer inaktiven Position, in der die bewegliche Klaue (16) entlang der Federzunge (11) für den Übergang des nicht progressiven Kupplungsmechanismus (8) aus einer entkuppelten Position in eine gekuppelte Position gleitet, axial auf der Welle (2) bewegbar und elastisch verformbar ist.

2. Getriebe nach Anspruch 1,
**dadurch gekennzeichnet, dass** die zweiten Kupplungssteuermittel (10) mindestens zwei Federzungen (11) umfassen, die sich entlang der Ausgangswelle (2) erstrecken und im Verhältnis zur Ausgangswelle (2) vorzugsweise diametral gegenüberliegend montiert sind, wobei die Federzungen (11) mittels eines Rings (12), der auf die Ausgangswelle (2) aufgezogen ist, an einem (11B) ihrer Enden (11A, 11 B) oder in der Nähe für eine verbundene axiale Verlagerungsmontage entlang der Ausgangswelle (2) aneinander gekoppelt sind.

3. Getriebe nach einem der Ansprüche 1 und 2,
**dadurch gekennzeichnet, dass** der nicht progressive Kupplungsmechanismus (8) mit beweglicher Klaue (16), der im Gehäuse (3) untergebracht ist, neben der bewegliche Klaue (16) in der Art einer Kupplungsmuffe einen ausgehöhlten Flansch (17) umfasst, wobei bewegliche Klaue (16) und Flansch (17) auf ihren gegenüberliegenden Seiten Zähne (18) tragen, wobei der ausgehöhlte Flansch (17) mit dem geführten drehenden Organ (6) des Untersetzungsgetriebes (4) rotierend verbunden ist, wogegen die bewegliche Klaue (16), die mit der Ausgangswelle (2) rotierend verbunden ist, die das Gehäuse (3) durchquert, unter der Einwirkung der ersten Kupplungssteuermittel (9) insbesondere in Richtung einer Annäherung des Flanschs (17) derart axial beweglich ist, dass die Zähne (18) des Flanschs (17) und der beweglichen Klaue (16) in gekuppelter Position ineinandergreifen, um unter Einwirkung eines rotierenden Antriebs des geführten drehenden Organ (6) des Untersetzungsgetriebes (4) den rotierenden Antrieb der axial beweglichen Klaue (16) und infolgedessen einen rotierenden Antrieb der Ausgangswelle (2), die den Flansch (17) und die bewegliche Klaue (16) axial durchquert, sicherzustellen, wobei die zweiten Kupplungssteuermittel (10) in aktiver Position zwischen beweglicher Klaue (16) und Flansch (17) zwischengestellt sind.

4. Getriebe nach einem der Ansprüche 1 bis 3,
**dadurch gekennzeichnet, dass** die bewegliche Klaue (16) des nicht progressiven Kupplungsmechanismus (8) die Form einer Kupplungsmuffe hat, die rotierend mit der Ausgangwelle (2) verbunden und axial gleitend entlang der Ausgangswelle (2) verlagerbar ist, wobei diese Kupplungsmuffe mit einem internen peripheren Absatz (19) ausgestattet ist, auf dem sich die Federzunge(n) (11) der zweiten Kupplungssteuermittel (10) in aktiver Position abstützen, wobei dieser interne periphere Absatz (19) entweder in einem einzigen Stück mit der beweglichen Klaue (16) oder mit Hilfe eines angesetzten Teils (25) realisiert ist, das axial und mit der bewegliche Klaue (16) rotierend verbunden montiert ist.

5. Getriebe nach einem der Ansprüche 1 bis 4 der Bauart, bei der die bewegliche Klaue (16) des nicht progressiven Kupplungsmechanismus (8) eine Kupplungsmuffe ist, die mit der Ausgangswelle (2) rotierend beweglich montiert und axial durch Gleiten entlang der Ausgangswelle (2) verschiebbar ist,
**dadurch gekennzeichnet, dass** die oder jede Federzunge (11) der zweiten Kupplungssteuermittel (10) in aktiver Position ist, die von einer (11A) ihrer freien Enden in Abstützung auf einem internen peripheren Absatz (19) der beweglichen Klaue (16) bereitgestellt wird, wobei das freie Ende (11A) der oder jeder Federzunge (11) in Richtung der Ausgangswelle gekrümmt ist, um eine Rampe (13) zu bilden, die durch Zusammenarbeit mit dem internen peripheren Absatz (19) der beweglichen Klaue (16) das Einziehen der entsprechenden Federzunge (11) im Hinblick auf ihren Übergang in die inaktive Position erleichtert.

6. Getriebe nach einem der Ansprüche 4 und 5,
**dadurch gekennzeichnet, dass** sich der oder jeder interne periphere Absatzabschnitt (19) der beweglichen Klaue (16), auf dem die oder eine Federzunge (11) mit ihrem freien Ende (11A) anschlägt, teilweise in einer internen axialen Rille (20) der Kupplungsmuffe erstreckt, wobei die Federzunge(n) (11) im in die Rillen (20) eingeführten Zustand mit der Kupplungsmuffe rotierend verbunden montiert sind.

7. Getriebe nach einem der Ansprüche 1 bis 6,
**dadurch gekennzeichnet, dass** die bewegliche Klaue (16) des nicht progressiven Kupplungsmechanismus (8) mit der Ausgangwelle (2) anhand mindestens eines U-förmigen Reiters (22) rotierend verbunden montiert ist, wobei einer (23) der Schenkel des U bei der axialen Verlagerung der der beweglichen Klaue (16) in Richtung einer Entkupplung einen axialen Anschlag der zweiten Kupplungssteuermittel (10) bildet.

8. Getriebe nach einem der Ansprüche 1 bis 7,
**dadurch gekennzeichnet, dass** das geführte drehende Organ (6) des Untersetzungsgetriebes (4) ein Zahnrad ist, das frei rotierend auf der Ausgangswelle (2) montiert ist, wobei die Kupplungsmechanismen (7, 8) auf der Ausgangswelle (2), einer auf der einen Seite und der andere auf der anderen Seite des Zahnrads, angeordnet sind.

9. Getriebe nach einem der Ansprüche 1 bis 8,
**dadurch gekennzeichnet, dass** der progressive Kupplungsmechanismus (7) eine Konusreibungskupplung ist, wobei diese Kupplung einen männlichen Konus (7A), der rotierend mit der Ausgangswelle (2) verbunden ist, und einen weiblichen konischen Bereich (7B), der mit dem geführten drehenden Organ des Untersetzungsgetriebes (4) rotierend verbunden ist, umfasst, wobei Konus (7A) und konischer Bereich (7B), die im Verhältnis zur Ausgangswelle (2) koaxial angeordnet sind, anhand mindestens der zweiten Kupplungsteuermittel (10), die in die Richtung einer Annäherung oder einer Entfernung voneinander bewegbar sind, um das Festspannen oder das Lösen eines männlichen Konus (7A) und des konischen Bereichs (7B) sicherzustellen, montiert sind.

10. Getriebe nach einem der Ansprüche 1 bis 9,
**dadurch gekennzeichnet, dass** die ersten Kupplungssteuermittel (9) ein Organ (14) wie eine Gabel umfassen, die winklig um eine Achse verlagerbar ist, die etwa senkreich zur Achse der Ausgangswelle (2) steht, wobei dieses Organ (14) mindestens einen Abschnitt wie einen Zahn (15) umfasst, der in eine externe ringförmige Nut (24) der beweglichen Klaue (16) des nicht progressiven Kupplungsmechanismus (8) eingreift.

## Claims

1. A gearbox between a primary motor shaft (1) and an output shaft (2), such as the wheel drive shaft, of a self-propelled machine, of the type comprising at least one housing (3) in which are housed, at least partially, a reduction gear mechanism (4) including an engine drive member (5), such as a worm screw, engaged with a driven rotating member (6), such as a sprocket wheel, mounted freely rotating on the output shaft (2), two clutch mechanisms (7, 8), one (7) progressive, the other (8) not progressive with a moving dog (16), by means of which the driven rotating member (6) can be coupled/separated with respect to the output shaft (2), a clutch control device comprising first clutch control means (9) driving axial movement of the movable dog (16) of the non-progressive clutch mechanism (8) along the output shaft (2) between two extreme positions, said first clutch control means (9) being able to be actuated from outside the housing (3), and second clutch control means (10) mounted, on the output shaft (2), movable, under the action of the axial movement of the movable dog (16), in an engagement direction, by bearing contact with said movable dog (16), between an active position, in which said second clutch control means (10) are inserted between the movable dog (16) and progressive clutch mechanism (7) and form a member transmitting the axial movement of the movable dog (16) to the progressive clutch mechanism (7) for the gradual passage of the clutch mechanism from a disengaged position to an engaged position, and an inactive or retracted position, in which the movable dog (16) can go from a disengaged position to the engaged position of the non-progressive clutch mechanism (8),
**characterized in that** the second clutch control means (10) comprises at least one spring leaf (11) extending along the output shaft (2), said spring leaf (11), mounted axially movably on said output shaft (2), being, during axial movement of the dog (16), movable from the disengaged extreme position in the engagement direction, by bearing of said movable dog (16) on said spring leaf (11), axially drivable on said shaft (2) and elastically deformable between inactive position, in which the movable dog (16) abuts against said spring leaf (11) to transmit, via the spring leaf (11) inserted between the movable dog (16) and progressive engagement mechanism (7), its axial movement to the progressive engagement mechanism (7), and an inactive position, in which the movable dog (16) slides along the spring leaf (11) for passage of the non-progressive engagement mechanism (8) from a disengaged position to an engaged position.

2. The gearbox according to claim 1,
**characterized in that** the second clutch control means (10) comprises at least two spring leaves (11) extending along the output shaft (2) and preferably mounted diametrically opposite relative to said output shaft (2), said spring leaves (11) being, at or near one (11 B) of their ends (11A, 11 B), coupled to one another, for an assembly secured an axial movement along said output shaft (2), by means of a ring (12) placed on said output shaft (2).

3. The gearbox according to one of claims 1 and 2,
**characterized in that** the non-progressive clutch mechanism (8) with movable dog (16) housed inside the housing (3) comprises, aside from the movable dog (16) of the sleeve type, a hollow flange (17), the movable dog (16) and flange (17) bearing teeth (18) on their opposite surfaces, the hollow flange (17) being rotatably secured to the driven rotating member (6) of the reduction gear mechanism (4) while the movable dog (16), secured in rotation to the output shaft (2) passing through said housing (3), is axially movable under the action of the first clutch control means (9), in particular in the direction coming closer to said flange (17), such that the teeth (18) of the flange (17) and the movable dog (16), in the engaged position, are housed between them so as to ensure, under the effect of rotational driving of the driven rotating member (6) of the reduction gear mechanism (4), the rotation of the movable dog (16) axially, and subsequently a rotation of the output shaft (2) axially passing through the flange (17) and the movable dog (16), the second clutch control means (10) being, in the active position, inserted between the movable dog (16) and flange (17).

4. The gearbox according to one of claims 1 to 3,
**characterized in that** the movable dog (16) of the non-progressive clutch mechanism (8) assumes the form of a sleeve mounted secured in rotation to the output shaft (2) and axially movable by sliding along said output shaft (2), said sleeve being provided with an inner peripheral shoulder (19) against which the spring leaf (leaves) (11) of the second clutch control means (10) bear in the active position, said inner peripheral shoulder (19) being made either in a single piece with the movable dog (16), or using an attached piece (25) mounted axially and rotatably secured to the movable dog (16).

5. The gearbox according to one of claims 1 to 4, of the type in which the movable dog (16) of the non-progressive clutch mechanism (8) is a sleeve, mounted secured in rotation with the output shaft (2) and axially movable by sliding along said output shaft (2),
**characterized in that** the or each spring leaf (11) of the second clutch control means (10) is, in the active position, positioned by one (11A) of its ends, called free end, bearing against an inner peripheral shoulder (19) of said movable dog (16), said free end (11A) of the or each spring leaf (11) being curved toward the output shaft to form a ramp (13) facilitating, by cooperation with the inner peripheral shoulder (19) of the movable dog (16), the retraction of the corresponding spring leaf (11) so that it may move to the inactive position.

6. The gearbox according to one of claims 4 and 5,
**characterized in that** the or each inner peripheral shoulder portion (19) of the movable dog (16), against which the or a spring leaf (11) abuts by its free end (11A), extends partially inside an inner axial slot (20) of said sleeve, the spring leaf (leaves) (11) being, in the state inserted in the slots (20), mounted secured in rotation with the sleeve.

7. The gearbox according to one of claims 1 to 6,
**characterized in that** the movable dog (16) of the non-progressive clutch mechanism (8) is mounted secured in rotation with the output shaft by means of at least one U-shaped clamp (22), one (23) of the branches of the U forming an axial stop of the second clutch control means (10) during the axial movement of the movable dog (16) in a disengaged position.

8. The gearbox according to one of claims 1 to 7,
**characterized in that** the driven rotating member (6) of the reduction gear mechanism (4) is a sprocket wheel mounted freely rotating on the output shaft (2), the clutch mechanisms (7, 8) being positioned on the output shaft (2), one on one side, the other on the other side of the sprocket wheel.

9. The gearbox according to one of claims 1 to 8,
**characterized in that** the progressive clutch mechanism (7) is a cone friction clutch, said clutch comprising a male cone (7A) secured in rotation with the output shaft (2) and a conical step (7B), said to be female, secured in rotation to the rotating driven member of the gear reduction mechanism (4), the cone (7A) and the conical step (7B), positioned coaxially relative to the output shaft (2), being mounted, by means of at least second clutch control means (10), movable in the direction coming closer together or further apart to ensure tightening or loosening of the male cone (7A) and the conical step (7B).

10. The gearbox according to one of claims 1 to 9,
**characterized in that** the first clutch control means (9) comprise a member (14), such as a fork, angularly movable around an axis substantially perpendicular to the axis of the output shaft (2), said member (14) comprising at least one part, such as a tooth (15), inserted in an outer annular groove (24) of the movable dog (16) of the non-progressive clutch mechanism (8).
